# EUROPEAN PATENT SPECIFICATION

(11) **EP 0 894 704 B1**
(45) Date of publication and mention of the grant of the patent: **31.12.2008**
(21) Application number: 98113346.5
(22) Date of filing: 17.07.1998
(51) Int. Cl.: B62L 3/02, B62K 23/06

(54) **Brake or clutch lever assembly for motor vehicle**
Brems- oder Kupplungs- Hebelanordnung für Motorfahrzeug
Assemblage de levier de freinage ou embrayage pour véhicule à moteur

(30) Priority: 23.07.1997 IT MI970562 U
(43) Date of publication of application: 03.02.1999
(73) Proprietor: MV AGUSTA MOTOR S.p.A., 21100 Varese, VA (IT)
(72) Inventor: Tamburini, Massimo, 47895 Domagnano (SM)
(74) Representative: Ripamonti, Enrico

(56) References cited:
- EP-A- 0 100 179

## Description

It is the object of this discovery an assembly unit of a brake driving lever for a motor vehicle or clutch lever of this last one according to preamble of principal claim.

As it is well known a lever assembly unit (also called pump-tank-lever assembly unit) includes besides this last one, a pump capable to operate on braking circuit of a motorcycle and a tank connected to it containing the liquid of this circuit. Such an assembly unit is located on handlebar both near right end part and left end one of this last one and it allows driving, by means of a usual hydraulic system, just of front brake of a motor vehicle of clutch of this last one.

EP 0 100 179 describes a known lever assembly unit of such a kind, wherein the brake or lever clutch has a protrusion directly operating on the braking circuit pump. In other words, the lever and the protrusion form an integer, i.e. a single piece and the movement of the lever also moves the protrusion.

It is also known that the operation of pump is started by a swing type lever in cooperation with brake of clutch lever.

Generally, brake of clutch lever and lever of a swing type are associated to a body of the assembly unit (attached to handlebar) by means of two or three hubs operating like a fulcrum or a hinge for movement of related lever. This construction design has various problems: it shows difficulties and construction costs and of maintenance not neglectable and it also shows possibility that above mentioned hubs are taken out of their respective locations with a subsequent detachment of their relative lever from body of assembly unit with a subsequent high danger condition for motor vehicle driver.

Purpose of this discovery is that of providing a lever assembly unit or pump-tank-lever assembly unit that is improved regarding similar assembly units already known.

In particular, purpose of discovery is that to provide an assembly unit of mentioned type that is of simple construction, that has confined costs, and that can provide a high safety in operation by user.

These and other purposes that will become apparent to those skilled in the art, are accomplished by a lever assembly unit according to enclosed claims.

For a better understanding of present discovery we enclose for simply indicative reasons, but not restrictive ones, following drawing, in which:

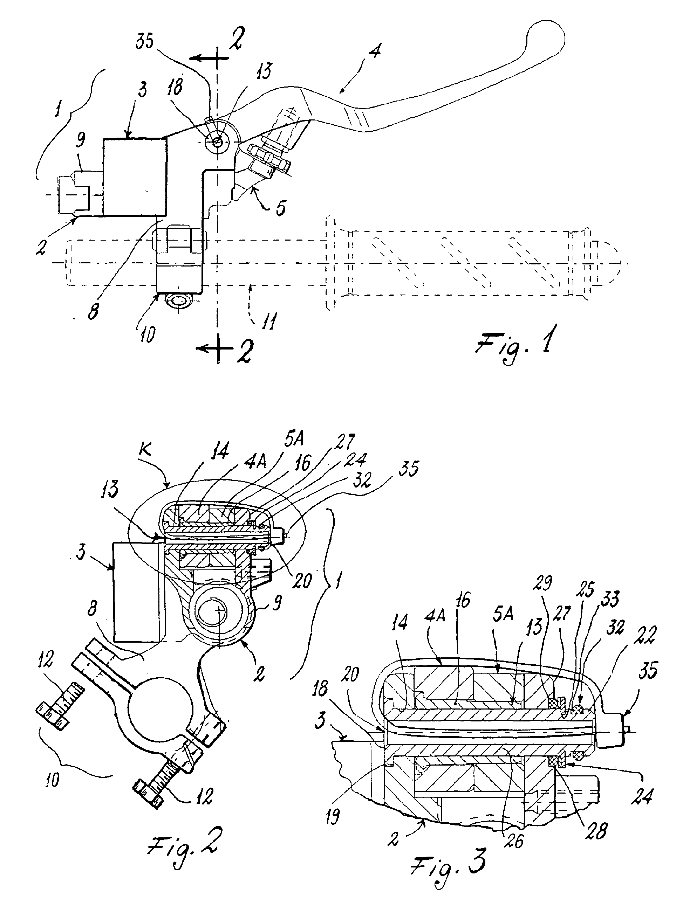

figure 1 shows an upward view of lever assembly unit or pump-tank-lever assembly unit designed according to present discovery;
figure 2 shows a cross section along line 2-2 of figure 1;
figure 3 shows an enlarged view of part indicated with K in figure 2.

With reference to mentioned figures, a lever assembly unit or a pump-tank-lever assembly unit of a motorcycle is generally indicated with 1 and it includes a usual pump 2 for the liquid of braking circuit of a vehicle, a tank 3 connected with this pump, a lever 4 for starting the brake or for starting clutch of motor vehicle and an adjustment lever or lever of swing type 5 to drive pump 2 and operationally connected with starting lever 4. Operation of lever 5 on pump 2 is adjustable in a way already known. Assembly unit 1 includes a body 8 (same part with body 9 of pump 2) provided with a usual attachment part 10 for attachment to a handlebar 11 of motorcycle, this attachment is obtained by means of screws 12.

According to this discovery, starting lever 4 and swing type lever 5 are hinged, both, to only one hub 13 located within a housing 14 provided in body 8 of assembly unit 1. A bush 16 is placed on this hub 13 around which portions 4A and 5A of levers 4 and 5 above mentioned are placed.

Hub 13 shows an enlarged head 18 located within an enlarged portion 19 of relative housing 14 and it is provided with a longitudinal passing through hole 20. Near its end part 22 opposite to head 18, hub 13 cooperates with a cut ring 24 placed within a ring shaped cavity 25 of a rod 26 of hub and resting against a surface 27 of body 8. Preferably, an elastic part like a ring of "O" type 28 is placed within a respective housing 29 provided in body 8, on this ring resting cut ring 24. On rod 26, near to above mentioned end part 22, is also placed a ring of "O" type 32 inserted within a relevant location 33 having such a depth not to allow taking out of this ring even if it would touch surface 27 of body 8 (or elastic ring 28) in the case cut ring 24 would separate from hub 13. As a result, rings 24 and 32 operate as first and second means of safety against taking out of hub from its location 14. As a further safety against this taking out, a clamp 35 is associated to hub 13 inserted into its hole 20 and clamping both portions 4A and 5A of levers 4 and 5 and a portion of body 8 of assembly unit 1.

Lever assembly unit or pump-tank-lever assembly unit according to this discovery is of simple construction and it is of safe and reliable use.

## Claims

1. Driving lever assembly unit (1) for a motor vehicle, as for a motorcycle, said driving lever assembly including a brake or clutch lever (4), a body (8) attachable to a handlebar (11) of the vehicle, a pump (2) and relevant tank (3) for liquid of braking circuit of said motor vehicle, said pump (2) and said tank (3) being associated with said body (8), and said driving lever assembly including a control lever or a swing lever (5) capable to start operation of said pump (2) on said braking circuit, **characterized in that** said brake or clutch lever (4) and said control lever (5) are separated from each other and are independently hinged to the body (8) of said driving lever assembly unit (1) by means of a single pivoting part (13), said levers (4, 5) being able to rotate around said pivoting part (13) when operated.

2. Lever assembly unit as illustrated in claim 1, **characterized in that** means are included against taking out (24, 32, 35) associated to pivoting part (13) and capable to avoid detachment of this last one from body (8) of lever assembly unit (1).

3. Lever assembly as illustrated in previous claims, **characterized in that** pivoting part (13) is inserted into a relevant location (14) provided in body (8) of lever assembly (1), shows an enlarged head (18) at one of its end parts inserted into an enlarged portion (19) of this location (14) and it includes a rod (26) to which at least part of anti taking out means are connected (24,32,35).

4. Lever assembly unit as illustrated in claim 3, **characterized in that** anti taking out means include a cut ring (24) and a ring of "O" type (32), said cut ring being capable to cooperate by resting on a surface (27) of body (8) of lever assembly (1), preferably between this ring (24) and said surface (27) an elastic ring (28) being placed in the middle, said rings (24;32) being placed in relevant locations (25,33) provided within rod (26) of pivoting part (13) near one of its free end parts (22).

5. Lever assembly unit as illustrated in claim 3, **characterized in that** rod (26) of pivoting part (13) is longitudinally drilled, in this hole (20) being placed a clamp (35) clamping portions of lever (4) of brake or of clutch and of control lever (5), as well as part of body (8) of lever assembly unit (1), said clamp (35) providing one of anti-taking out means.

## Patentansprüche

1. Lenkstangeneinheit (1) eines Motorfahrzeugs, beispielsweise Motorrads, wo die genannte Lenkstangeneinheit auch einen Brems- oder Kupplungshebel (4), einen am Fahrzeuglenker (11) befestigten Körper (8), eine Pumpe (2) und zugehörigen Behälter (3) für die Flüssigkeit des Bremskreislaufs des genannten Fahrzeugs enthält, die genannte Pumpe (2) und der genannte Behälter (3) zum genannten Körper (8) gehören, und der genannten Lenkstangeneinheit ein Steuerhebel oder schwingender Hebel (5) inbegriffen ist, um die genannte Pumpe (2) des genannten Bremskreislaufs zu betätigen, charakterisiert durch die Tatsache, dass der genannte Brems- oder Kupplungshebel (4) und der genannte Steuerhebel (5) voneinander getrennt und unabhängig am Körper (8) der genannten Lenkstangeneinheit (1) durch ein einzelnes drehbares Element (13) befestigt sind, und die genannten Hebel (4, 5) frei um das genannte Element (13) drehen können, wenn betätigt.

2. Hebeleinheit, wie in Anspruch 1 dargestellt, charakterisiert durch die Tatsache, dass mit den drehbaren Elementen (13) assoziierte Zugsperren (24, 32, 35) inbegriffen und in der Lage sind, erstere an der Trennung vom Körper (8) der Hebeleinheit (1) zu behindern.

3. Hebeleinheit, wie in den Ansprüchen oben dargestellt, charakterisiert durch die Tatsache, dass das drehbare Element (13) in einen entsprechenden Sitz (1) im Körper (8) der Hebeleinheit (1) eingesetzt ist, an einem der in dem verbreiterten Teil (19) dieses Sitzes (14) eingesetzten Enden eine verbreiterte Basis (18) aufweist und eine Strebe (26) beinhaltet, mit der zumindest ein Teil der Zugsperren (24, 32, 35) verbunden ist.

4. Hebeleinheit, wie in Anspruch 3 dargestellt, charakterisiert durch die Tatsache, dass die Zugsperren einen Schneidring (24) und einen O-Ring (32) beinhalten, und der genannte Schneidring durch Auflage auf eine Fläche (27) des Körpers (8) der Hebeleinheit (1) unterstützt, wo sich bevorzugt zwischen diesem Ring (24) und der genannten Fläche (27) ein elastischer Ring (28) befindet, und die genannten Ringe (24, 32) in entsprechenden Sitzen (25, 33) innerhalb der Strebe (26) des drehbaren Elements (13) neben einem der freien Enden (22) angebracht sind.

5. Hebeleinheit, wie in Anspruch 3 dargestellt, charakterisiert durch die Tatsache, dass die Strebe (26) des drehbaren Elements (13) längs gelocht ist, und in dieser Öffnung (20) eine Klemme (35) angebracht ist, die Teile des Hebels (4) der Bremse oder der Kupplung des Steuerhebels (5) sperrt, sowie Teil des Körpers (8) der Hebeleinheit (1), wobei die genannte Klemme (35) eine der Zugsperren darstellt.

## Revendications

1. Unité groupe levier de guidage (1) d'un véhicule à moteur, par exemple un cyclomoteur, ce groupe levier de guidage comprenant un levier du frein ou de l'embrayage (4), un corps (8) fixé au guidon (11) du véhicule, une pompe (2) et le réservoir correspondant (3) pour le liquide du circuit de freinage du véhicule à moteur, cette pompe (2) et ce réservoir (3) étant associés au corps (8), et ce groupe levier de guida comprenant un levier de commande ou un levier oscillant (5) en mesure de mettre en marche la pompe (2) sur le circuit de freinage, **caractérisée par le fait que** ce levier du frein ou de l'embrayage (4) et le levier de commande (5) sont séparés l'un de l'autre et montés sur charnière indépendamment du corps (8) de cette unité groupe levier de guidage (1) par une partie pivotante (13), les leviers (4 et 5) etant en mesure de pivoter indépendamment l'un de l'autre autour de la partie pivotante (13) quand ils sont actionnés.

2. Unité groupe levier comme indiqué dans la revendication 1, **caractérisée par le fait que** sont présents des dispositions anti-extraction (24, 32, 35) associés à la partie pivotante (13) et en mesure d'éviter le décrochage de cette dernière du corps (8) de l'unité groupe levier (1).

3. Unité groupe levier comme indiqué dans les revendications précédentes, **caractérisée par le fait que** la partie pivotante (13) est placée dans un logement (14) prévue dans le corps (8) du groupe levier (1), présente une base élargie (18) à hauteur d'une de ses extrémités, logée dans une partie élargie (19) de ce logement (14) et comprend une tige (26) à laquelle est raccordée au moins une partie des dispositifs anti-extraction (24, 32 et 35).

4. Unité groupe levier comme indiqué dans la revendication 3, **caractérisée par le fait que** les dispositions anti-extraction comprennent un anneau de coupure (24) et un joint torique (32), cet anneau de coupure étant en mesure d'agir sur une surface (27) du corps (8) du groupe levier (1), de préférence au centre entre cet anneau (24) et cette surface (27) étant placé un anneau élastique (28), les deux anneaux (24 et 32) étant placés dans logements (25, 33) prévus à l'intérieur de la tige (26) de la partie pivotante (13) près d'une de ses deux extrémités libres (22).

5. Unité groupe levier comme indiqué dans la revendication 3, **caractérisée par le fait que** la tige (26) de la partie pivotante (13) est perforée dans le sens de la longueur et que dans ce trou (20) est placé une fixation (35) qui bloque une partie du levier (4) du frein ou de l'embrayage et du levier de commande (5), ainsi qu'une partie du corps (8) de l'unité groupe levier (1), cette fixation (35) constituant un des dispositions anti-extraction.
